(19) Europäisches Patentamt / European Patent Office / Office européen des brevets

(11) EP 2 872 957 B1

(12) FASCICULE DE BREVET EUROPEEN

(45) Date de publication et mention de la délivrance du brevet:
**05.09.2018 Bulletin 2018/36**

(21) Numéro de dépôt: **13739765.9**

(22) Date de dépôt: **01.07.2013**

(51) Int Cl.:
**G05D 1/02** *(2006.01)*

(86) Numéro de dépôt international:
**PCT/FR2013/051543**

(87) Numéro de publication internationale:
**WO 2014/009631 (16.01.2014 Gazette 2014/03)**

(54) **PROCÉDÉ DE CONTRÔLE DE TRAJECTOIRE D'UN VÉHICULE AUTONOME À ROUES DIRECTRICES**

VERFAHREN ZUR STEUERUNG DER BAHN EINES AUTONOMEN FAHRZEUGS MIT GELENKTEN RÄDERN

METHOD FOR CONTROLLING THE PATH OF AN AUTONOMOUS VEHICLE HAVING STEERED WHEELS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **12.07.2012 FR 1256716**

(43) Date de publication de la demande:
**20.05.2015 Bulletin 2015/21**

(73) Titulaire: **Renault S.A.S.**
**92100 Boulogne-Billancourt (FR)**

(72) Inventeur: **MINOIU-ENACHE, Nicoleta**
**F-78000 Versailles (FR)**

(56) Documents cités:
- **CHRISTOPHE CARIOU ET AL: "Autonomous maneuver of a farm vehicle with a trailed implement: motion planner and lateral-longitudinal controllers", 2010 IEEE INTERNATIONAL CONFERENCE ON ROBOTICS AND AUTOMATION : ICRA 2010 ; ANCHORAGE, ALASKA, USA, 3 - 8 MAY 2010, IEEE, PISCATAWAY, NJ, USA, 3 mai 2010 (2010-05-03), pages 3819-3824, XP031743382, ISBN: 978-1-4244-5038-1**
- **MICHALEK M ET AL: "Feedback control framework for car-like robots using the unicycle controllers", ROBOTICA, CAMBRIDGE, GB, vol. 30, no. 4, 25 juillet 2011 (2011-07-25), pages 517-535, XP009166456, ISSN: 0263-5747, DOI: 10.1017/S0263574711000750**
- **GONZALEZ R ET AL: "Adaptive control for a mobile robot under slip conditions using an LMI based approach", PROCEEDINGS OF THE EUROPEAN CONTROL CONFERENCE 2009; BUDAPEST, HUNGARY; AUGUST 23-36, 2009,, 23 août 2009 (2009-08-23), pages 1251-1256, XP009166435, ISBN: 978-963-311-369-1**
- **SHAI A AROGETI ET AL: "Path Following of Autonomous Vehicles in the Presence of Sliding Effects", IEEE TRANSACTIONS ON VEHICULAR TECHNOLOGY, IEEE SERVICE CENTER, PISCATAWAY, NJ, US, vol. 61, no. 4, 9 mai 2012 (2012-05-09), pages 1481-1492, XP011443462, ISSN: 0018-9545, DOI: 10.1109/TVT.2012.2186991**

## Description

### Domaine technique

La présente invention concerne un procédé de contrôle de trajectoire d'un véhicule au moins une roue directrice apte à se déplacer selon un mode autonome.

L'invention concerne plus particulièrement le contrôle de la position et de la vitesse d'un véhicule lorsqu'il est en mode autonome, à basse vitesse, c'est-à-dire à une vitesse inférieure à 10m/s (36 km/h), et de préférence pour des virages qui peuvent aller jusqu'au rayon de virage minimum obtenu pour le braquage maximum du véhicule.

### Etat de la technique

Le mode de commande autonome, c'est-à-dire sans chauffeur, est utile pour la réalisation de nombreux services, par exemple pour un service de parking automatisé, un service voiturier (déplacement autonome du véhicule vers une place de parking), service de recharge automatique (déplacement autonome du véhicule vers une borne de recharge), service de déplacement sans conducteur de personnes à mobilité réduite, service de rééquilibrage de flottes de véhicules par la mise en peloton.

Dans ce mode autonome, on définit généralement une trajectoire globale cible qui définit le déplacement que doit suivre le véhicule entre un point de départ et un point d'arrivée. Cette trajectoire globale est spatiale, c'est-à-dire qu'elle définit la position d'une pluralité de points par lesquels le véhicule doit passer. Le véhicule est alors commandé pour suivre cette trajectoire cible. Cependant, en conditions réelles, le véhicule dévie toujours de cette trajectoire cible en raison de nombreuses perturbations présentes dans l'environnement dans lequel se déplace le véhicule: vent, déformations de la chaussée, chaussée rendue glissante par la pluie ou la glace, dévers... Pour que le véhicule revienne sur la trajectoire cible, il est connu, notamment par la demande de brevet EP 2 280 241, de calculer en permanence la position courante du véhicule et, si la position courante du véhicule ne correspond plus à la position d'un point de la trajectoire de cible, de déterminer une trajectoire locale, qui est à la fois spatiale et temporelle, pour que le véhicule revienne sur la trajectoire globale cible. Cette trajectoire locale définit la position d'une pluralité de points par lesquels le véhicule doit passer et une vitesse en chacun de ces points. Des signaux de contrôle du véhicule sont alors générés pour que le véhicule suive cette trajectoire locale et revienne sur la trajectoire cible. Ces signaux sont générés en temps réel par optimisation d'une fonction non linéaire, laquelle optimisation requiert une grande puissance de calcul. De plus, mise à part la position du véhicule, il est nécessaire de mesurer sa vitesse ainsi que plusieurs autres signaux, comme par exemple l'accélération et la vitesse de variation de l'accélération.

### Description de l'invention

L'invention a pour but de proposer un procédé de contrôle de trajectoire d'un véhicule autonome qui soit simple à mettre en oeuvre sans nécessiter une grosse puissance de calcul.

La présente invention a pour objet un procédé de contrôle de la position et de la vitesse d'un véhicule apte à se déplacer de manière autonome et comportant au moins une roue directrice, ledit procédé comportant les étapes suivantes:

- détermination d'une trajectoire globale définissant le déplacement du véhicule entre un point de départ et un point d'arrivée, ladite trajectoire globale comprenant une pluralité de points intermédiaires entre le point de départ et le point d'arrivée, une position étant définie pour chaque point de la trajectoire globale;
- détermination de la position courante du véhicule;
- si la position courante ne correspond pas à un point de la trajectoire globale, génération d'une trajectoire locale reliant la position courante du véhicule à un point de la trajectoire globale pour que le véhicule revienne sur la trajectoire globale, ladite trajectoire locale comprenant une pluralité de points, une position et une vitesse étant définies pour chaque point de la trajectoire locale;
- génération d'une commande de braquage de la roue directrice et d'une commande de vitesse du véhicule pour que le véhicule se déplace selon ladite trajectoire locale;

caractérisé en ce que les commandes de braquage et de vitesse sont générées par optimisation convexe d'inégalités matricielles linéaires.

Une telle optimisation convexe d'inégalités matricielles linéaires (appelée Linear Matrix Inequalities dans la littérature anglo-saxonne) est utilisée pour le contrôle de trajectoire de robots unicycles actionnés par deux roues indépendantes non directives comme mentionné dans le document "Adaptive control for a mobile robot under slip conditions using an LMI-based approach" Gonzalez, R., Fiacchini, M., Alamo, T., Guzman, J. L., Rodriguez, F. (2010), European Journal of Control, 16:144-158.

<A> Les robots unicycles ne comportant pas de roues directrices, la loi de commande de ces derniers est très différente de celle de véhicules à roues directrices, notamment parce que les véhicules à roues directrices ont un angle maximum de braquage plus réduit. Selon, il est donc prévu de rajouter des contraintes supplémentaires dans la loi de commande du véhicule par rapport à la commande d'un robot unicycle.
La génération de la commande de braquage et de la commande de vitesse comporte les étapes suivantes:

- déterminer un modèle cinématique pour le véhicule; et
- déterminer les commandes de braquage et de vitesse du véhicule à partir dudit modèle cinématique par optimisation convexe d'inégalités matricielles linéaires.

Selon un mode de réalisation de l'invention, le modèle cinématique du véhicule est déterminé à partir d'un modèle cinématique d'un robot à deux roues indépendantes, le modèle cinématique du robot étant complété par une pluralité de contraintes propres aux véhicules à roues directrices.
Ladite pluralité de contraintes propres aux véhicules à roues directrices comprend:

- une contrainte de stabilité asymptotique par rapport à la trajectoire locale;

<A> Il est connu, par le document "Autonomous maneuver of a farm vehicle with a trailed implement: motion planner and lateral longitudinal controllers", de CHRISTOPHE CARIOU ET AL (2010 IEEE INTERNATIONAL CONFERENCE ON ROBOTICS AND AUTOMATION: ICRA 2010 ; ANCHORAGE, ALASKA, USA, 3 - 8 MAY 2010, IEEE, PISCATAWAY, NJ, USA, 3 mai 2010, pages 3819-3824, XP031743382,ISBN: 978-1-4244-5038-1), de controler la position et la vitesse d'un véhicule selon le préambule de la revendication 1. Toutefois, ce document porte particulièrement sur l'optimisation de trajectoire d'un attelage dans un champ pour des problématiques de productivité.

Des études récentes, telle celle publiée dans l'article "Feedback control framework for car-like robots using the unicycle controllers", de MICHALEK M ET AL, (ROBOTICA, CAMBRIDGE, GB, vol. 30, no. 4, 25 juillet 2011, pages 517-535, XP009166456, ISSN: 0263-5747,001: 10.1017/S0263574711000750) ont montré que, sous certaines conditions supplémentaires, les lois de commande développées pour des robots à deux roues peuvent être transférées aux véhicules à quatre roues.
Enfin, le document "Path Following of Autonomous Vehicles in the Presence of Sliding Effects",de SHAI A AROGETI ET AL (IEEE TRANSACTIONS ON VEHICULAR TECHNOLOGY, IEEE SERVICE CENTER, PISCATAWAY, NJ, US, vol. 61, no. 4, 9 mai 2012, pages 1481-1492, XP011443462, ISSN: 0018-9545,001: 10.1109ITVT.2012.2186991) décrit un modèle cinématique prenant en compte le glissement des roues.

- une contrainte de limitation de courbure de la trajectoire locale;
- une contrainte de continuité et de dérivabilité des commandes de braquage et de vitesse; et
- une contrainte pour la faisabilité de la transposition du modèle cinématique d'un robot à deux roues indépendantes à un véhicule comportant au moins une roue directrice.

Avantageusement, on complète le modèle avec une ou plusieurs contrainte(s) parmi les contraintes suivantes:

- une contrainte de limitation de la variation des commandes;
- une contrainte sur la zone de démarrage des commandes;
- une contrainte sur le placement des pôles du modèle en boucle fermée

L'invention a également pour objet un dispositif de contrôle de la position et de la vitesse d'un véhicule apte à se déplacer de manière autonome et comportant au moins une roue directrice, ledit dispositif comprenant

- un circuit de localisation et de navigation pour déterminer

  • une trajectoire globale définissant le déplacement du véhicule entre un point de départ et un point d'arrivée, ladite trajectoire globale comprenant une pluralité de points intermédiaires entre le point de départ et le point d'arrivée, une position étant définie pour chaque point de la trajectoire globale;
  • la position courante du véhicule;
  • si la position courante ne correspond pas à un point de la trajectoire globale, génération d'une trajectoire locale reliant la position courante du véhicule à un point de la trajectoire globale, ladite trajectoire locale comprenant une pluralité de points, une position et une vitesse étant définies pour chaque point de la trajectoire locale;

- un calculateur pour générer une commande de braquage de la roue directrice et d'une commande de vitesse du véhicule pour que le véhicule se déplace selon ladite trajectoire locale;

caractérisé en ce que le calculateur génère les commandes de braquage et de vitesse par optimisation convexe d'inégalités matricielles linéaires.

D'autres avantages pourront encore apparaître à l'homme du métier à la lecture des exemples ci-dessous, illustrés par les figures annexées, donnés à titre illustratif.

**Brève description des figures**

- La figure 1 représente un organigramme des étapes du procédé de l'invention;
- La figure 2 est un schéma montrant suivant une trajectoire locale pour revenir vers une trajectoire globale;
- La figure 3 est un schéma d'un dispositif apte à mettre en ouvre le procédé de la figure;
- La figure 4 est un schéma montrant l'angle de braquage $\delta$ des roues avants d'un véhicule;
- La figure 5 est un schéma illustrant les paramètres cinématiques d'un véhicule dans un repère absolu $(X_a, Y_a)$ et un repère relatif $(X, Y)$ associé au véhicule;
- La figure 6 est un schéma illustrant la zone de commande autorisée pour les commandes de braquage et de vitesse selon le procédé de l'invention;
- La figure 7 est un schéma illustrant une contrainte de placement de pôles du modèle cinématique pour un fonctionnement en boucle fermée; et
- La figure 8 est un schéma illustrant les performances du procédé de l'invention.

**Description détaillée d'au moins un mode de réalisation**

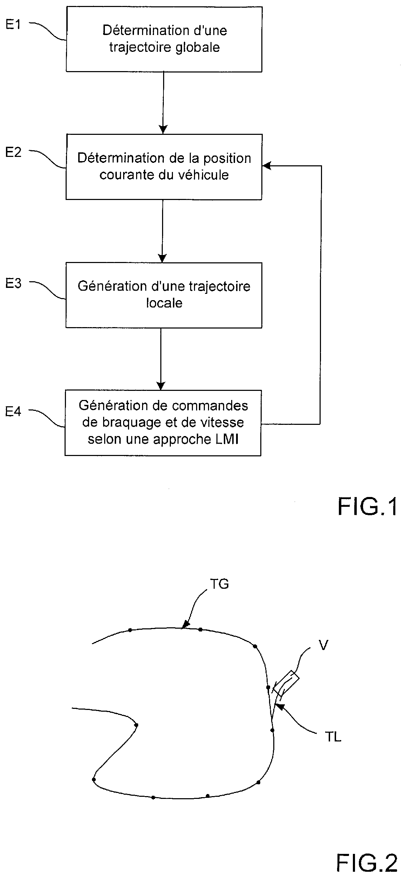

En référence aux figures 1 et 2, le procédé de l'invention comporte les étapes suivantes:

- étape E1: une trajectoire globale TG est déterminée entre un point de départ et un point d'arrivée; cette trajectoire définit le déplacement souhaité du véhicule; elle comprend une pluralité de points intermédiaires entre le point de départ et le point d'arrivée, une position étant associée à chaque point de la trajectoire globale; les positions des points de la trajectoire sont par exemple des positions GPS (pour Global Positioning System en langue anglaise); les points sont éventuellement régulièrement espacés le long de la trajectoire;
- Etape E2: la position courante du véhicule V dont la trajectoire est à contrôler est déterminée par un système de localisation appropriée;
- Etape E3: si le véhicule V s'est écarté de la trajectoire globale TG, on génère une trajectoire locale TL reliant la position courante du véhicule à un point de la trajectoire globale pour que le véhicule revienne sur la trajectoire globale comme illustré par la figure 2; la trajectoire locale TL comprend une pluralité de points; une position et une vitesse sont définies pour chacun des points de la trajectoire locale; ces points sont de préférence moins espacés que les points de la trajectoire globale TG;
- Etape E4: on génère une commande de braquage pour les roues directrices du véhicule et une commande de vitesse permettant au véhicule de se déplacer selon ladite trajectoire locale; la commande de braquage est l'angle de braquage souhaité $\delta_{car}$ pour le véhicule et la commande de vitesse est la vitesse souhaitée $\upsilon_{car}$ pour le véhicule; selon l'invention, ces commandes sont générées par une optimisation convexe d'inégalités matricielles linéaires.

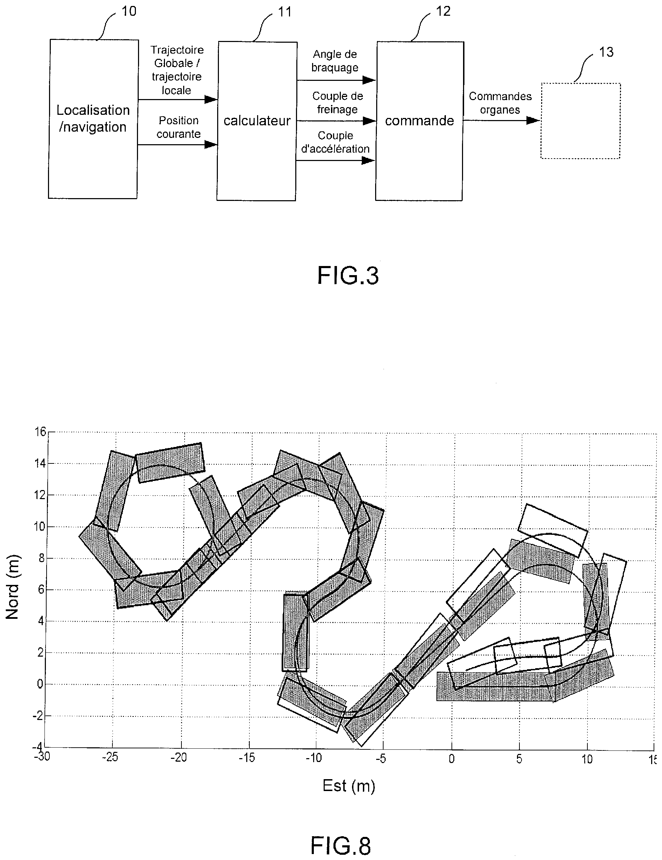

Ces étapes sont mis en oeuvre par le dispositif tel que représenté à la figure 3. Il comporte:

- un circuit de localisation et de navigation 10: ce circuit est chargé de calculer les trajectoires globale et locale et de fournir la position courante du véhicule; ce circuit met en oeuvre les étapes E1 à E3;
- un calculateur 11: ce calculateur est chargé de calculer l'angle de braquage souhaité $\delta_{car}$ et la vitesse souhaitée $\upsilon_{car}$ et de convertir la vitesse $\upsilon_{car}$ en un couple d'accélération ou un couple de freinage; ce calculateur met donc en oeuvre l'étape E4 du procédé de l'invention.

Ce dispositif comprend en outre un circuit de commande 12 qui, à partir de l'angle de braquage souhaité $\delta_{car}$ et du couple d'accélération ou de freinage souhaité, génère des commandes pour différents organes 13 du véhicule, notamment pour la colonne de direction, les freins, et le moteur.

Une caractéristique importante de l'invention se trouve dans la mise en oeuvre de l'étape E4. Selon l'invention, pour générer des commandes permettant au véhicule de suivre la trajectoire locale qui est la trajectoire de référence, on utilise une méthode développée pour les robots "unicycle" à deux roues indépendantes à laquelle on rajoute des contraintes supplémentaires liées au contrôle de trajectoire d'un véhicule à roues directrices. Selon cette méthode, les commandes sont générées par une optimisation convexe d'inégalités matricielles linéaires (optimisation convexe LMI).

La méthode pour les robots "unicycle" est notamment décrite dans le document "Adaptive control for a mobile robot under slip conditions using an LMI-based approach" de Gonzalez, R., Fiacchini, M., Alamo, T., Guzman, J. L., Rodriguez, F., (2010), European Journal of Control, 16:144-158. Les contraintes supplémentaires sont en partie décrites dans le document "Feedback control framework for car-like robots using unicycle controllers", Michatek, M. and Koztowski, K, (2011), Robotica, pages 1-19, Cambridge University Press.

La génération des commandes de braquage et de vitesse selon l'invention est décrite ci-après de manière détaillée. Cette génération comprend les étapes suivantes:

A- détermination d'un modèle cinématique du véhicule à roues directrices; et
B- détermination d'une loi de commande par optimisation convexe LMI.

A- Définition d'un modèle cinématique pour le véhicule

Dans le but de modéliser la voiture, on fait l'hypothèse que, à basse vitesse, les roues du véhicule sont rigides. Le modèle cinématique du véhicule est alors défini par la relation suivante:

$$\begin{cases} \dot{x} = \upsilon \cdot \cos\theta \\ \dot{y} = \upsilon \cdot \sin\theta \\ \dot{\theta} = \dfrac{\upsilon}{L} \cdot \tan\delta \\ \dot{\delta} = u \end{cases} \qquad (1)$$

où - x est la position du point M sur l'axe x, noté $X_a$, d'un repère absolu, M étant le point milieu du train arrière du véhicule;
- y est la position du point M sur l'axe y, noté $Y_a$, du repère absolu;
- $\theta$ est l'angle de cap du véhicule au point M dans le repère absolu;
- $\upsilon$ est la vitesse du véhicule au point M,
- $\delta$ est l'angle de braquage des roues avant du véhicule, c'est-à-dire l'angle que font les roues avant par rapport à l'axe longitudinal du véhicule, et
- L est la distance entre l'essieu avant et l'essieu arrière du véhicule.

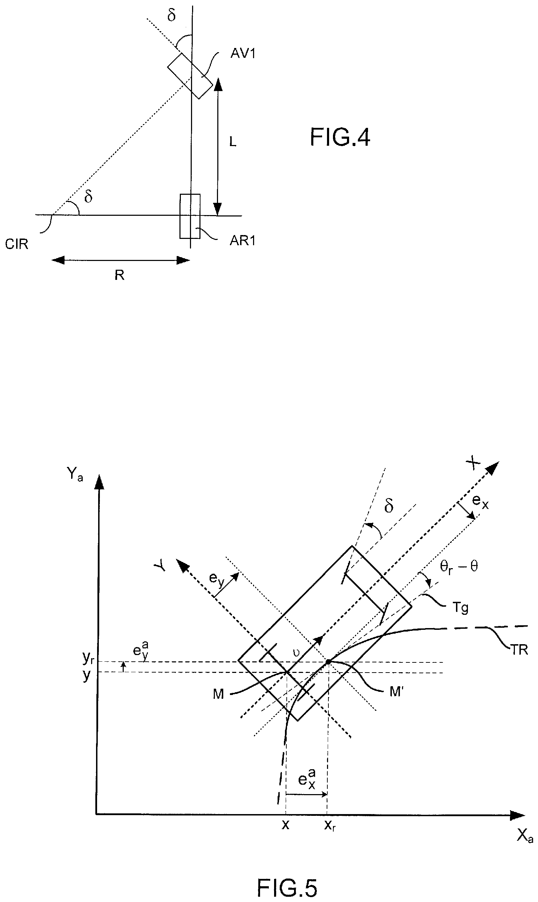

Les paramètres $\delta$ et L sont visibles sur la figure 4 qui illustre le braquage d'une roue avant AV1 d'un angle $\delta$ d'un véhicule par rapport à l'axe de direction d'une roue arrière AR1 correspondante. Dans cette figure, R désigne la distance entre le centre de rotation instantanée CIR et la roue AR1. Si l'on considère le véhicule et ses quatre roues, en supposant un angle identique de braquage des roues avant, R est alors la distance entre le centre de rotation instantanée et le point M. R est également appelé rayon.

On a alors:

$\upsilon$ = R·$\omega$ et tan$\delta$ = L/R
D'où $\omega$ = $\upsilon$/R = $\upsilon$·tan$\delta$/L

Ce modèle peut donc être écrit comme un système à trois états (x,y,$\theta$) avec une dynamique supplémentaire comme défini par la relation suivante:

$$\begin{cases} \dot{x} = \upsilon \cdot \cos\theta \\ \dot{y} = \upsilon \cdot \sin\theta \\ \dot{\theta} = \omega \end{cases}$$

$$\dot{\delta} = u \qquad (2)$$

où $\varpi = \upsilon \cdot \tan\delta / L$

La partie supérieure de la relation (2) décrit un système de type robot à deux roues appelé classiquement «unicycle». Le contrôle de la trajectoire du véhicule consiste à faire converger les variables $(x,y,\theta)$ vers un point M' $(x_r,y_r,\theta_r)$ de la trajectoire de référence qui est la trajectoire locale et ensuite à calculer l'angle de braquage correspondant en le saturant à la valeur maximale de braquage possible de la voiture.

L'angle de braquage souhaité $\delta_{car}$ pour le véhicule s'écrit alors

$$\delta_{car} = \mathrm{sat}\left(\arctan\left(\frac{L\omega}{\upsilon}\right), \delta^{max}\right) \qquad (3)$$

où $\delta^{max}$ est l'angle de braquage maximal du véhicule.

Un contrôle de braquage, par exemple de type proportionnel, doit être ensuite ajouté pour faire converger l'angle $\delta$ vers l'angle de braquage souhaité $\delta_{car}$.

Par ailleurs, la trajectoire de référence peut être décrite par la relation suivante :

$$\begin{cases} \dot{x}_r = \upsilon_r \cdot \cos\theta_r \\ \dot{y}_r = \upsilon_r \cdot \sin\theta_r \\ \dot{\theta}_r = \omega_r \end{cases} \qquad (4)$$

où - $x_r$ est la position du point M' de la trajectoire de référence sur l'axe $X_a$ du repère absolu;

- $y_r$ est la position du point M' de la trajectoire de référence sur l'axe $Y_a$ du repère absolu;
- $\theta_r$ est l'angle de cap au point M' de la trajectoire de référence dans le repère absolu;
- $\upsilon_r$ est la vitesse au point M' de la trajectoire de référence dans le repère absolu, et
- $\omega_r = \dot{\theta}_r$ est la vitesse de rotation en lacet de la trajectoire de référence.

L'erreur de trajectoire $e_a$ du véhicule par rapport à la trajectoire de référence dans le repère absolu est donnée par la relation:

$$\left(e_x^a, e_y^a, e_\theta^a\right)^T = \left(x_r - x, y_r - y, \theta_r - \theta\right)^T \qquad (5)$$

où

- $e_x^a$ est l'erreur de trajectoire du véhicule au point M par rapport au point M' de la trajectoire de référence sur l'axe $X_a$ du repère absolu;

- $e_y^a$ est l'erreur de trajectoire du véhicule au point M par rapport au point M' de la trajectoire de référence sur l'axe $Y_a$ du repère absolu; et

- $e_\theta^a$ est l'erreur de cap de la trajectoire du véhicule au point M par rapport au point M' de la trajectoire de référence dans le repère absolu.

L'erreur e dans un repère relatif lié au véhicule, comme le repère (X,Y) de la figure 5, est donnée par la relation

suivante

$$e = \begin{pmatrix} \cos\theta & \sin\theta & 0 \\ -\sin\theta & \cos\theta & 0 \\ 0 & 0 & 1 \end{pmatrix} e^a = Te^a \qquad (6)$$

En dérivant l'équation (6), les dynamiques de l'erreur dans le repère relatif sont alors:

$$\begin{cases} \dot{e}_x = \upsilon_r \cos e_\theta + \omega e_y - \upsilon \\ \dot{e}_y = \upsilon_r \sin e_\theta - \omega e_x \\ \dot{e}_\theta = \omega_r - \omega \end{cases} \qquad (7)$$

Un développement de premier ordre autour d'une erreur relative nulle e=0 donne alors le système différentiel linéaire suivant

$$\begin{pmatrix} \dot{e}_x \\ \dot{e}_y \\ \dot{e}_\theta \end{pmatrix} = \begin{pmatrix} 0 & \omega_r & 0 \\ -\omega_r & 0 & \upsilon_r \\ 0 & 0 & 0 \end{pmatrix} \begin{pmatrix} e_x \\ e_y \\ e_\theta \end{pmatrix} + \begin{pmatrix} 1 & 0 \\ 0 & 0 \\ 0 & 1 \end{pmatrix} \begin{pmatrix} \upsilon_r - \upsilon \\ \omega_r - \omega \end{pmatrix} \qquad (8)$$

où

- $e_x$ est l'erreur de trajectoire du véhicule au point M par rapport à la trajectoire de référence sur l'axe X du repère relatif;
- $e_y$ est l'erreur de trajectoire du véhicule au point M par rapport à la trajectoire de référence sur l'axe Y du repère relatif;
- $e_\theta$ est l'erreur de cap de la trajectoire du véhicule par rapport à la trajectoire de référence dans le repère relatif;

A noter que dans la figure 5, Tg désigne la tangente de la trajectoire de référence TR au point M'.
La relation (8) peut aussi s'écrire comme suit:
soit

$$\dot{e} = A(t) \cdot e + B \cdot \psi \qquad (9)$$

avec $\psi = (\upsilon_r - \upsilon, \omega_r - \omega)^T$

$$A(t) = \begin{pmatrix} 0 & \omega_r & 0 \\ -\omega_r & 0 & \upsilon_r \\ 0 & 0 & 0 \end{pmatrix}$$

$$B(t) = \begin{pmatrix} 1 & 0 \\ 0 & 0 \\ 0 & 1 \end{pmatrix}$$

La relation (9) est un système dynamique linéaire variant en fonction du temps car les vitesses de référence $\upsilon_r$ et $\omega_r$ ne sont pas constantes. Toutefois, ces vitesses références varient entre des limites connues:

$$\upsilon_r \in \left[\upsilon_r^{min}; \upsilon_r^{max}\right] \text{ et } \omega_r \in \left[\omega_r^{min}; \omega_r^{max}\right] \qquad (10)$$

La valeur $\upsilon_r^{min}$ n'est pas égale à 0 car le véhicule n'est pas contrôlable à l'arrêt.

En conséquence, la matrice d'état du système décrit par la relation (9) varie entre des limites connues décrites par l'enveloppe convexe des quatre sommets comme défini ci-après :

$$A(t) \in A = Co\{A_1, A_2, A_3, A_4\}$$

où

- Co est l'enveloppe convexe;

- $A_1 = A(\upsilon_r^{min}; \omega_r^{min})$

- $A_2 = A(\upsilon_r^{min}; \omega_r^{max})$

- $A_3 = A(\upsilon_r^{max}; \omega_r^{min})$

- $A_4 = A(\upsilon_r^{max}; \omega_r^{max})$

Ce modèle cinématique est complété en rajoutant des contraintes supplémentaires propres au véhicule à roues directrices. Le contrôle de trajectoire obtenu pour un véhicule «unicyle» peut être appliqué à un véhicule à roues directrices si on rajoute des contraintes ou conditions pour garantir la stabilité et la bonne poursuite de la trajectoire de référence. Ces contraintes sont les suivantes:

Condition 1. $(x_r, y_r, \theta_r)$ doit satisfaire la relation (4)

Condition 2. $\left| \dfrac{\dot{\theta}_r}{\dot{x}_r \cos(\theta_r) + \dot{y}_r \sin(\theta_r)} \right| \leq \left| \dfrac{\tan(\delta^{max})}{L} \right|$

Condition 3. $\dfrac{\partial(\upsilon, \omega)^T}{\partial(e_x^a, e_y^a, e_\theta^a)} \in L_\infty^3$ et $\dfrac{\partial(\upsilon, \omega)^T}{\partial t} \in L_\infty^2$

Condition 4. $\left| \dfrac{\omega}{\upsilon} \right| \leq \left| \dfrac{\tan(\delta^{max})}{L} \right|$ pour la quasi-totalité des t>0

Les conditions 1, 2, 3 portent sur la trajectoire de référence et la condition 4 porte sur la faisabilité de la transposition des lois de contrôle conçues pour véhicule «unicyle» à un véhicule à roues directrices.

Plus spécifiquement, la condition 1 garantit qu'une stabilité asymptotique est possible le long de la trajectoire de référence. La condition 2 impose une courbure limitée à la trajectoire de référence atteignable avec l'angle maximal de braquage $\delta^{max}$ des roues directrices du véhicule de passagers. La condition 3 impose une continuité et une dérivabilité des entrées de commande $(\upsilon, \omega)$ de manière à obtenir un angle de braquage souhaité qui soit continue pour le véhicule. Cette condition permet par exemple d'imposer que l'angle de braquage ne passe pas soudainement par exemple de 10° à 40°. Enfin, la condition 4 porte sur relation nécessaire entre la vitesse longitudinale v et la vitesse de rotation $\omega$ pour respecter la limite de l'angle de braquage maximale $\delta_{max}$.

Ces quatre conditions sont définies dans le document "Feedback control framework for car-like robots using unicycle controllers", Michałek Michalek, M. and Kozłowski Kozlowski, K, (2011), Robotica, pages 1-19, Cambridge University Press.

Selon un mode de réalisation avantageux, d'autres contraintes sont rajoutées: une contrainte sur le placement des pôles du modèle en boucle fermée et une contrainte de limitation de variations des commandes par rapport aux commande suivies par la trajectoire de référence et une contrainte sur la zone de démarrage des commandes.

B- détermination d'une loi de commande par optimisation convexe LMI.

La loi de commande ($\upsilon_{car},\delta_{car}$) mise en place se base sur une combinaison linéaire de gains statiques $K_i$ valides aux sommets suivants

$$\Re = \left\{(\upsilon_r^{min},\omega_r^{min}),(\upsilon_r^{min},\omega_r^{max}),(\upsilon_r^{max},\omega_r^{min}),(\upsilon_r^{max},\omega_r^{max})\right\} \qquad (12)$$

Cette loi de commande repose sur les relations suivantes

$$- \quad (\upsilon_r,\omega_r) = \sum_{i=1}^{4} \lambda_i \Re(i)$$

$$- \quad A(t) = \sum_{i=1}^{4} \lambda_i A_i \qquad\qquad (13)$$

$$- \quad \sum_{i=1}^{4} \lambda_i = 1 \quad \text{avec } \lambda_i \geq 0, \forall i \in [1..4]$$

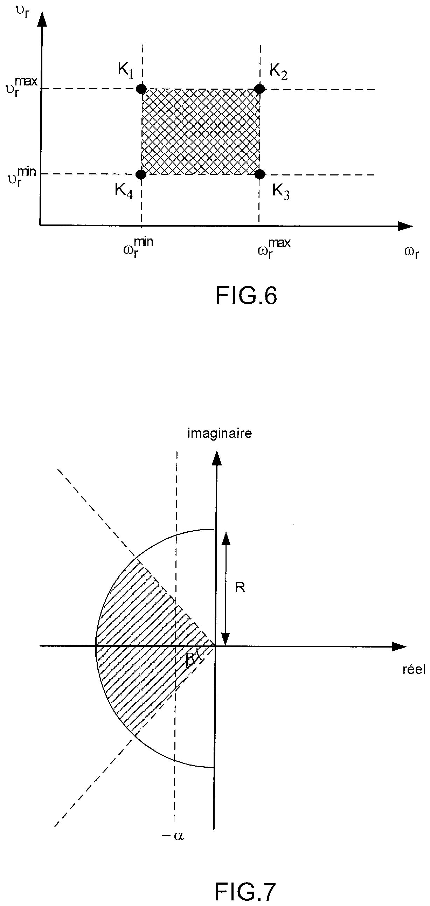

A chaque instant, on sélectionne un gain de contrôle K qui est une combinaison linéaire $K = \sum_{i=1}^{4} \lambda_i K_i$ de gains aux quatre sommets tels que montrés à la figure 6. Les paramètres $\lambda_i$ sont des coefficients de pondération dont la somme est égale à 1. On a par exemple

$$K= 0,1\ K1 + 0,15\ K2 + 0,2\ K3 + 0,55\ K4$$

Les gains de contrôle $K_i$ sont en fait les gains de retour de régulation sur l'erreur qui vont permettre de calculer les commandes de vitesse $\upsilon_{car}$ et de braquage $\delta_{car}$ du véhicule. Le gain K et les gains $K_i$ se présentent sous la forme de matrice 2x3. La première ligne de la matrice K contient les gains du retour de régulation sur les erreurs $e_x$, $e_y$ et $e_\theta$ pour l'entrée de commande $\upsilon_{car}$($\upsilon_{car}=\upsilon_r-K_{11}*e_x-K_{12}*e_y-K_{13}*e_\theta$). La deuxième ligne de la matrice K contient les gains du retour de régulation sur les erreurs $e_x$, $e_y$ et $e_\theta$ pour la vitesse de rotation $\omega$ ($\omega=\omega_r-K_{21}*e_x-K_{22}*e_y-K_{23}*e_\theta$). Comme la commande de braquage $\delta_{car}$ est liée à la vitesse de rotation $\omega$ par la relation (3), la deuxième ligne de la matrice du gain K contient implicitement les gains du retour de régulation sur les erreurs $e_x$, $e_y$ et $e_\theta$ pour la commande de braquage $\delta_{car}$.
Les coefficients de pondération $\lambda_i$ de la contribution de chaque gain $K_i$ s'obtiennent en temps réel par la résolution d'un système linéaire de 3 équations avec 4 inconnues ($\lambda_1$, $\lambda_2$, $\lambda_3$, $\lambda_4$) issu de la relation (13). Deux équations s'obtiennent à partir de $A(t) = \sum_{i=1}^{4} \lambda_i A_i$ car la matrice A est sous-déterminée (l'une de ses lignes ne comporte que des zéros. La troisième équation est $\sum_{i=1}^{4} \lambda_i = 1$.

Ce calcul est assez léger en termes de calcul et la première solution trouvée est généralement suffisante. Au lieu de faire ce calcul en temps réel, il est aussi possible d'utiliser une table prédéfinie qui, pour des valeurs $\upsilon_r$ et $\omega_r$ comprises entre les valeurs minimales et maximales, respectivement $(\upsilon_r^{min},\upsilon_r^{max})$ et $(\omega_r^{min},\omega_r^{max})$, fournit des coefficients de pondération ($\lambda_1$, $\lambda_2$, $\lambda_3$, $\lambda_4$).
Dans les paragraphes suivants, un problème d'optimisation convexe LMI est défini pour calculer les gains $K_i$.

Ce problème est défini hors ligne et son temps de calcul est d'ordre de 10s sur un PC de bureau usuel en utilisant Matlab et le Robust Control Toolbox.

Les conditions 1 et 4 sont transformées ci-après sous forme d'inégalités matricielles linéaires. La condition 2 ne l'est pas car la trajectoire de référence est une entrée de la loi de commande. Par ailleurs, la condition 3 est satisfaite par le choix d'une loi de commande linéaire en K ($\upsilon_{car}=\upsilon_r-K_{11}*e_x-K_{12}*e_y-K_{13}*e_\theta$ et $\omega_{car}=\omega_r-K_{21}*e_x-K_{22}*e_y-K_{23}*e_\theta$).

B-1 transformation de la condition 1 en une inégalité matricielle

La stabilité asymptotique en boucle fermée s'obtient si la matrice d'état du système dynamique A(t) présente des valeurs propres négatives:

$$\dot{e} = \sum_{i=1}^{4}\lambda_i(A_i + BK_i)\cdot e = \sum_{i=1}^{4}\lambda_i A_i e + \sum_{i=1}^{4}\lambda_i BK_i e \qquad (14)$$

La condition est satisfaite s'il existe une matrice carrée symétrique 3x3 définie positive Q et des matrices 2x3 $Y_i = K_i \cdot Q$ vérifiant l'inégalité matricielle suivante:

$$QA_i^T + A_iQ + Y_i^TB^T + BY_i \prec 0 \qquad \forall i \in [1..4] \qquad (15)$$

B-2 détermination d'une inégalité matricielle sur le placement des pôles en boucle fermée

La réponse dynamique d'un robot «unicyle» est déterminée par la position des valeurs propres dans le demi-plan réel négatif du plan réel-imaginaire. Pour contraindre ces valeurs propres dans une région de rayon r, d'ouverture $2\beta$, et de partie réelle en deçà de $-\alpha$ telle que représentée sur la figure 7, les inégalités suivantes doivent être satisfaites:

$$\bullet \quad QA_i^T + A_iQ + Y_i^TB^T + BY_i + 2\alpha Q < 0$$

$$\bullet \quad \begin{pmatrix} -rQ & A_iQ+BY_i \\ QA_i^T + Y_i^TB^T & -rQ \end{pmatrix} \prec 0 \qquad (16)$$

$$\bullet \quad \begin{pmatrix} M_i\sin\beta & N_i\cos\beta \\ N_i\cos\beta & M_i\sin\beta \end{pmatrix} \prec 0$$

où $M_i = QA_i^T + A_iQ + Y_i^TB^T + BY_i$ et $N_i = A_iQ - QA_i^T + BY_i - Y_i^TB^T$

Ces inégalités sont définies dans le document "H∞ design with pole placement constraints: An LMI approach", Chilali M. and Gahinet P., 1996, IEEE Transactions on Automatic Control, 41(3):358-367.

B-3 transformation de la condition 4 en une inégalité matricielle

Toutes les commandes ($\upsilon,\omega$) qui peuvent être exécutées par un robot «unicycle» ne sont pas possibles pour un véhicule de passagers. La vitesse de rotation du véhicule est liée à la vitesse de déplacement de celui-ci et à l'angle de braquage des roues directrices. Si la Condition 4 n'est pas respectée par ($\upsilon,\omega$), l'angle de braquage $\delta$ demandé à la voiture sera saturé à sa valeur maximale et le guidage du véhicule sera en boucle ouverte. Ceci entraine alors des erreurs dans la poursuite de la trajectoire de référence. Le respect de la condition 4 est donc pris en compte dans la synthèse de la loi de commande définie pour le robot «unicycle»:

$$\begin{cases} \left( \dfrac{1}{L}\tan\delta^{max} \quad 1 \right)\begin{pmatrix} \upsilon \\ \omega \end{pmatrix} \geq 0 \\ \left( -\dfrac{1}{L}\tan\delta^{max} \quad 1 \right)\begin{pmatrix} \upsilon \\ \omega \end{pmatrix} \geq 0 \end{cases} \tag{17}$$

Les inégalités (17) peuvent également s'écrire:

$$\begin{cases} \lambda_i\left( \dfrac{1}{L}\tan\delta^{max} \quad 1 \right)K_i e \leq \lambda_i \dfrac{\upsilon_r^i}{L}\tan\delta^{max} + \lambda_i\omega_r^i \\ \lambda_i\left( -\dfrac{1}{L}\tan\delta^{max} \quad 1 \right)K_i e \leq -\lambda_i \dfrac{\upsilon_r^i}{L}\tan\delta^{max} + \lambda_i\omega_r^i \end{cases} \tag{18}$$

Et ensuite, elle peut être transformée en les inégalités matricielles linéaires suivantes:

$$\bullet \begin{pmatrix} \left( \dfrac{\upsilon_r^i}{L}\tan\delta^{max} + \omega_r^i \right)^2 & \left( \dfrac{1}{L}\tan\delta^{max} \ 1 \right)Y_i \\ Y_i^T\left( \dfrac{1}{L}\tan\delta^{max} \ 1 \right)^T & Q \end{pmatrix} \succeq 0$$

$$\bullet \begin{pmatrix} \left( -\dfrac{\upsilon_r^i}{L}\tan\delta^{max} + \omega_r^i \right)^2 & \left( -\dfrac{1}{L}\tan\delta^{max} \ 1 \right)Y_i \\ Y_i^T\left( -\dfrac{1}{L}\tan\delta^{max} \ 1 \right)^T & Q \end{pmatrix} \succeq 0$$

$$\tag{19}$$

B-4 détermination d'une inégalité matricielle sur la contrainte de limitation de la variation des commandes

Il est avantageux de contraindre les commandes de vitesses entre des valeurs limites souhaitées :

$$\begin{aligned} |\upsilon_r - \upsilon| &\leq \Delta\upsilon^{max} \\ |\omega_r - \omega| &\leq \Delta\omega^{max} \end{aligned} \tag{20}$$

Ceci peut aussi s'écrire de la façon suivante

$$\left(\begin{array}{cc} \left(\Delta\upsilon^{max}\right)^2 & (1\ 0)Y \\ Y^T\begin{pmatrix}1\\0\end{pmatrix} & Q \end{array}\right) \succeq 0$$

$$\left(\begin{array}{cc} \left(\Delta\omega^{max}\right)^2 & (0\ 1)Y \\ Y^T\begin{pmatrix}0\\1\end{pmatrix} & Q \end{array}\right) \succeq 0$$

(21)

B-5 détermination d'une inégalité matricielle sur la zone de démarrage des commandes

Il est avantageux de prendre en compte une zone de l'espace des erreurs de suivi dans laquelle il est le plus probable que le contrôle autonome démarre, avec l'objectif d'optimiser la réponse du système pour ces situations. Une telle zone de démarrage est décrite par des valeurs maximales des erreurs. On définit en quelque sorte un «tube» autour de la trajectoire de référence.

$$Z_0 = Co\left\{\left[\pm e_{x0}^{max},\pm e_{y0}^{max},\pm e_{\theta 0}^{max}\right]^T\right\} = Co\left\{z_j, j = 1...2^3\right\}$$

(22)

Les inégalités matricielles linéaires correspondant à la relation (23) sont les suivantes:

$$\begin{pmatrix} 1 & z_j^T \\ z_j & Q \end{pmatrix} \succeq 0 \ \text{avec j=1,..,2}^3$$

(23)

où les $z_j$ sont les sommets de la région $Z_0$.

B-6 Calcul des gains $K_i$ par optimisation convexe LMI

Une fois toutes les inégalités matricielles linéaires établies, le problème suivant est résolu : on minimise la trace de matrice Q sous les contraintes définies par les relations (15), (16), (19), (21) et (23). Une telle opération de minimisation est bien connue de l'homme du métier. Minimiser la trace de Q revient à minimiser un ellipsoïde invariant E (telle que $e^TQe=1$) qui contient la zone de démarrage définie précédemment. Un ellipsoïde invariant est utilisé pour que toute trajectoire qui démarre à l'intérieur de cet ellipsoïde reste à l'intérieur de celui-ci pendant la convergence vers l'état d'équilibre. Si on minimise la trace de la matrice Q, on minimise la somme des éléments sur la diagonale de cette matrice et on minimise donc la longueur des demi-axes de l'ellipsoïde E. Ainsi, pendant la convergence, les erreurs restent le plus proche possible de point d'équilibre, c'est-à-dire de zéro. Ce type de minimisation est par exemple décrit dans le document "Vehicle assistance system for lane keeping, lane departure avoidance and yaw stability: Approach by simultaneous steering and differential braking" N. Minoiu Enache, S. Mammar, S. Glaser and B. Lusetti, Journal Européen des Systèmes Automatisés, Volume 44, No. 7, pp. 811-852, Sept.-Oct. 2010.
A la fin de cette opération de minimisation, les gains $K_i$ sont déterminés.

B-7 Calcul de la vitesse souhaitée $\upsilon_{car}$ et de l'angle de braquage souhaité $\delta_{car}$ à partir des gains $K_i$

La vitesse souhaitée $\upsilon_{car}$ et l'angle de braquage souhaité $\delta_{car}$ pour le véhicule des passagers se calculent par les formules suivantes:

-

$$-\ \upsilon_{car} = \upsilon = \upsilon_r - (1\ 0)\cdot K\cdot e$$

$$\delta_{car} = sat(a\tan\left(\frac{L\omega}{\upsilon}\right),\delta^{max})$$

$$\text{avec } \omega = \omega_r - (0\ 1)\cdot K\cdot e$$

-

Le contrôle de trajectoire selon l'invention a pour avantage d'être calculé dans l'espace d'origine d'évolution du véhicule, ce qui permet d'imposer un cahier des charges relativement complet sur la réponse du véhicule et ne nécessite pas de dérivées en temps réel. Le procédé est applicable à des trajectoires avec des virages très serrés et des vitesses très basses jusqu'à 1m/s, mais aussi pour des vitesses plus élevées comme par exemple 10m/s. Par ailleurs, le calcul en temps réel des commandes reste d'une complexité faible.

Cette invention est applicable à des véhicules autonomes ou bi-modales avec deux modes de conduite, conduite manuelle et conduite autonome.

**Revendications**

1. Procédé de contrôle de la position et de la vitesse d'un véhicule apte à se déplacer de manière autonome et comportant au moins une roue directrice, ledit procédé comportant les étapes suivantes:

   - détermination (E1) d'une trajectoire globale définissant le déplacement du véhicule entre un point de départ et un point d'arrivée, ladite trajectoire globale comprenant une pluralité de points intermédiaires entre le point de départ et le point d'arrivée, une position étant définie pour chaque point de la trajectoire globale;
   - détermination (E2) de la position courante du véhicule;
   - si la position courante ne correspond pas à un point de la trajectoire globale, génération (E3) d'une trajectoire locale reliant la position courante du véhicule à un point de la trajectoire globale, ladite trajectoire locale comprenant une pluralité de points, une position et une vitesse étant définies pour chaque point de la trajectoire locale;
   - génération (E4) d'une commande de braquage de la roue directrice et d'une commande de vitesse du véhicule pour que le véhicule se déplace selon ladite trajectoire locale;

   **caractérisé en ce que** les commandes de braquage et de vitesse sont générées par optimisation convexe d'inégalités matricielles linéaires.

2. Procédé selon la revendication 1, **caractérisé en ce que** la génération de la commande de braquage et de la commande de vitesse comporte les étapes suivantes:

   - déterminer un modèle cinématique pour le véhicule; et
   - déterminer les commandes de braquage et de vitesse à partir dudit modèle cinématique par optimisation convexe d'inégalités matricielles linéaires.

3. Procédé selon la revendication 2, **caractérisé en ce que** le modèle cinématique du véhicule est déterminé à partir d'un modèle cinématique d'un robot à deux roues indépendantes, le modèle cinématique du robot étant complété par une pluralité de contraintes propres aux véhicules à roues directrices.

4. Procédé selon la revendication 3, **caractérisé en ce que** ladite pluralité de contraintes propres aux véhicules à roues directrices comprend:

   - une contrainte de stabilité asymptotique par rapport à la trajectoire locale;
   - une contrainte de limitation de courbure de la trajectoire locale;
   - une contrainte de continuité et de dérivabilité des commandes de braquage et de vitesse; et
   - une contrainte pour la faisabilité de la transposition du modèle cinématique d'un robot à deux roues indépendantes à un véhicule comportant au moins une roue directrice

5. Procédé selon la revendication 4, **caractérisé en ce que** on complète le modèle cinématique avec une ou plusieurs contrainte(s) supplémentaire(s) parmi les contraintes suivantes:

   - une contrainte de limitation de la variation des commandes;
   - une contrainte sur la zone de démarrage des commandes;
   - une contrainte sur le placement des pôles du modèle en boucle fermée

6. Dispositif de contrôle de la position et de la vitesse d'un véhicule apte à se déplacer de manière autonome et comportant au moins une roue directrice, ledit dispositif comprenant

   - un circuit de localisation et de navigation (10) pour déterminer

• une trajectoire globale définissant le déplacement du véhicule entre un point de départ et un point d'arrivée, ladite trajectoire globale comprenant une pluralité de points intermédiaires entre le point de départ et le point d'arrivée, une position étant définie pour chaque point de la trajectoire globale;
• la position courante du véhicule;
• la génération d'une trajectoire locale reliant la position courante du véhicule à un point de la trajectoire globale, ladite trajectoire locale comprenant une pluralité de points, une position et une vitesse étant définies pour chaque point de la trajectoire locale;

- un calculateur (11) pour générer une commande de braquage de la roue directrice et d'une commande de vitesse du véhicule pour que le véhicule se déplace selon ladite trajectoire locale;

**caractérisé en ce que** le calculateur génère les commandes de braquage et de vitesse par optimisation convexe d'inégalités matricielles linéaires.

**Patentansprüche**

1. Verfahren zum Steuern der Position und der Geschwindigkeit eines Fahrzeugs, das geeignet ist, sich autonom zu bewegen und das mindestens ein gelenktes Rad umfasst, wobei das Verfahren die folgenden Schritte umfasst:

- Bestimmen (E1) einer globalen Bahn, die die Bewegung des Fahrzeugs zwischen einem Ausgangspunkt und einem Ankunftspunkt definiert, wobei die globale Bahn eine Vielzahl von Zwischenpunkten zwischen dem Ausgangspunkt und dem Ankunftspunkt umfasst, wobei eine Position für jeden Punkt der globalen Bahn definiert ist;
- Bestimmen (E2) der aktuellen Position des Fahrzeugs;
- falls die aktuelle Position nicht einem Punkt der globalen Bahn entspricht, Erzeugen (E3) einer lokalen Bahn, die die aktuelle Position des Fahrzeugs mit einem Punkt der globalen Bahn verbindet, wobei die lokale Bahn eine Vielzahl von Punkten umfasst, wobei eine Position und eine Geschwindigkeit für jeden Punkt der lokalen Bahn definiert sind;
- Erzeugen (E4) eines Einschlagbefehls des gelenkten Rads und eines Geschwindigkeitsbefehls des Fahrzeugs, damit sich das Fahrzeug gemäß der lokalen Bahn bewegt;

**dadurch gekennzeichnet, dass** die Einschlag- und Geschwindigkeitsbefehle durch konvexe Optimierung linearer Matrixungleichheiten erzeugt werden.

2. Verfahren nach Anspruch 1, **dadurch gekennzeichnet, dass** das Erzeugen des Einschlagbefehls und des Geschwindigkeitsbefehls die folgenden Schritte umfasst:

- Bestimmen eines kinematischen Modells für das Fahrzeug, und
- Bestimmen der Einschlag- und Geschwindigkeitsbefehle ausgehend von dem kinematischen Modell durch konvexe Optimierung linearer Matrixungleichheiten.

3. Verfahren nach Anspruch 2, **dadurch gekennzeichnet, dass** das kinematische Modell des Fahrzeugs ausgehend von einem kinematischen Modell eines Roboters mit zwei unabhängigen Rädern bestimmt wird, wobei das kinematische Modell des Roboters mit einer Vielzahl von Auflagen, die Fahrzeugen mit gelenkten Rädern eigen ist, vervollständigt wird.

4. Verfahren nach Anspruch 3, **dadurch gekennzeichnet, dass** die Vielzahl von Auflagen, die den Fahrzeugen mit gelenkten Rädern eigen ist, Folgendes umfasst:

- eine asymptotische Stabilitätsauflage in Bezug auf die lokale Bahn;
- eine Krümmungseinschränkungsauflage der lokalen Bahn;
- eine Kontinuitäts- und Ableitbarkeitsauflage der Einschlag- und Geschwindigkeitsbefehle, und
- eine Auflage für die Durchführbarkeit der Transposition des kinematischen Modells eines Roboters mit zwei unabhängigen Rädern auf ein Fahrzeug, das mindestens ein gelenktes Rad umfasst.

5. Verfahren nach Anspruch 4, **dadurch gekennzeichnet, dass** man das kinematische Modell mit einer oder mehr zusätzlichen Auflage(n) aus den folgenden Auflagen vervollständigt:

- eine Einschränkungsauflage der Variation der Befehle;
- eine Auflage hinsichtlich der Startzone der Befehle;
- eine Auflage hinsichtlich der Platzierung der Pole des Modells in geschlossener Schleife.

6. Vorrichtung zur Steuerung der Position und der Geschwindigkeit eines Fahrzeugs, das geeignet ist, sich autonom zu bewegen und mindestens ein gelenktes Rad umfasst, wobei die Vorrichtung Folgendes umfasst

- eine Lokalisierungs- und Navigationsschaltung (10) zum Bestimmen

• einer globalen Bahn, die die Bewegung des Fahrzeugs zwischen einem Ausgangspunkt und einem Ankunftspunkt definiert, wobei die globale Bahn eine Vielzahl von Zwischenpunkten zwischen dem Ausgangspunkt und dem Ankunftspunkt umfasst, wobei eine Position für jeden Punkt der globalen Bahn definiert ist;
• der aktuellen Position des Fahrzeugs;
• des Erzeugens einer lokalen Bahn, die die aktuelle Position des Fahrzeugs mit einem Punkt der globalen Bahn verbindet, wobei die lokale Bahn eine Vielzahl von Punkten umfasst, wobei eine Position und eine Geschwindigkeit für jeden Punkt der lokalen Bahn bestimmt sind;

- einen Rechner (11) zum Erzeugen eines Einschlagbefehls des gelenkten Rads und eines Geschwindigkeitsbefehls des Fahrzeugs, damit sich das Fahrzeug gemäß der lokalen Bahn bewegt;

**dadurch gekennzeichnet, dass** der Rechner die Einschlag- und Geschwindigkeitsbefehle durch konvexe Optimierung linearer Matrixungleichheiten erzeugt.

## Claims

1. Method for controlling the position and speed of a vehicle capable of moving in an autonomous manner and having at least one steered wheel, said method comprising the following steps:

- determining (E1) an overall path defining the course of the vehicle between a starting point and an endpoint, said overall path comprising a plurality of intermediate points between the starting point and the endpoint, a position being defined for each point of the overall path;
- determining (E2) the current position of the vehicle;
- if the current position does not correspond to a point on the overall path, generating (E3) a local path connecting the current position of the vehicle to a point on the overall path, said local path comprising a plurality of points, a position and a speed being defined for each point of the local path;
- generating (E4) a steering control signal for the steered wheel and a speed control signal for the vehicle so that the vehicle moves along said local path;

**characterized in that** the steering and speed control signals are generated by convex optimization of linear matrix inequalities.

2. Method according to Claim 1, **characterized in that** the generation of the steering control signal and of the speed control signal comprises the following steps:

- determining a kinematic model for the vehicle; and
- determining the steering and speed control signals on the basis of said kinematic model by convex optimization of linear matrix inequalities.

3. Method according to Claim 2, **characterized in that** the kinematic model of the vehicle is determined on the basis of a kinematic model of a robot having two independent wheels, the kinematic model of the robot being supplemented by a plurality of constraints specific to vehicles having steered wheels.

4. Method according to Claim 3, **characterized in that** said plurality of constraints specific to vehicles having steered wheels comprises:

- a stability constraint which is asymptotic with respect to the local path;
- a constraint of limitation of curvature of the local path;

- a constraint of continuity and derivability of the steering and speed control signals; and
- a constraint for the feasibility of transposing the kinematic model from a robot having two independent wheels to a vehicle having at least one steered wheel.

5. Method according to Claim 4, **characterized in that** the kinematic model is supplemented with one or more constraints from among the following:

    - a constraint of limitation of the variation of the control signals;
    - a constraint on the starting area of the control signals;
    - a constraint on the placing of the closed-loop poles of the model.

6. Device for controlling the position and speed of a vehicle capable of moving in an autonomous manner and having at least one steered wheel, said device comprising:

    - a location and navigation circuit (10) for determining:

        • an overall path defining the course of the vehicle between a starting point and an endpoint, said overall path comprising a plurality of intermediate points between the starting point and the endpoint, a position being defined for each point of the overall path;
        • the current position of the vehicle;
        • the generation of a local path connecting the current position of the vehicle to a point on the overall path, said local path comprising a plurality of points, a position and a speed being defined for each point of the local path;

    - a computer (11) for generating a steering control signal for the steered wheel and a speed control signal for the vehicle so that the vehicle moves along said local path;

**characterized in that** the computer generates the steering and speed control signals by convex optimization of linear matrix inequalities.

E1 — Détermination d'une trajectoire globale

E2 — Détermination de la position courante du véhicule

E3 — Génération d'une trajectoire locale

E4 — Génération de commandes de braquage et de vitesse selon une approche LMI

FIG.1

FIG.2

FIG.3

FIG.8

FIG.4

FIG.5

FIG.6

FIG.7

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 2280241 A

**Littérature non-brevet citée dans la description**

- **GONZALEZ, R. ; FIACCHINI, M. ; ALAMO, T. ; GUZMAN, J. L. ; RODRIGUEZ, F.** Adaptive control for a mobile robot under slip conditions using an LMI-based approach. *European Journal of Control,* 2010, vol. 16, 144-158
- Autonomous maneuver of a farm vehicle with a trailed implement: motion planner and lateral longitudinal controllers. **CHRISTOPHE CARIOU et al.** 2010 IEEE INTERNATIONAL CONFERENCE ON ROBOTICS AND AUTOMATION : ICRA 2010. IEEE, 03 Mai 2010, 3819-3824
- **MICHALEK M et al.** Feedback control framework for car-like robots using the unicycle controllers. *ROBOTICA,* 25 Juillet 2011, vol. 30 (4), ISSN 0263-5747,001, 517-535

- Path Following of Autonomous Vehicles in the Presence of Sliding Effects. **SHAI A AROGETI et al.** IEEE TRANSACTIONS ON VEHICULAR TECHNOLOGY. IEEE SERVICE CENTER, 09 Mai 2012, vol. 61, 1481-1492
- Feedback control framework for car-like robots using unicycle controllers. **MICHATEK, M. ; KOZTOWSKI, K.** Robotica. Cambridge University Press, 2011, 1-19
- **CHILALI M. ; GAHINET P.** H∞ design with pole placement constraints: An LMI approach. *IEEE Transactions on Automatic Control,* 1996, vol. 41 (3), 358-367
- **N. MINOIU ENACHE ; S. MAMMAR ; S. GLASER ; B. LUSETTI.** Vehicle assistance system for lane keeping, lane departure avoidance and yaw stability: Approach by simultaneous steering and differential braking. *Journal Européen des Systèmes Automatisés,* Septembre 2010, vol. 44 (7), 811-852